# FASCICULE DE BREVET EUROPEEN

(11) **EP 4 616 102 B1**
(45) Date de publication et mention de la délivrance du brevet: **10.06.2026**
(21) Numéro de dépôt: 23771860.6
(22) Date de dépôt: 14.09.2023
(51) Int. Cl.: F16L 37/14

(54) **RACCORD TUBULAIRE COMPRENANT UN TEMOIN VISUEL DE VERROUILLAGE**
ROHRVERBINDUNG MIT VISUELLER VERRIEGELUNGSANZEIGE
TUBULAR COUPLING COMPRISING A VISUAL LOCKING INDICATOR

(30) Priorité: 09.11.2022 FR 2211650; 03.01.2023 FR 2300021; 31.05.2023 FR 2305431
(43) Date de publication de la demande: 17.09.2025
(73) Titulaire: A. RAYMOND ET CIE, 38000 Grenoble (FR)
(72) Inventeur: WINKLER, Tristan, 79108 Freiburg (DE); ZHANG, Xiaoqing, 38330 Montbonnot- Saint-Martin (FR); QUE, Feng, Zhenjiang, Jiangsu 212009 (CN); FEI, Tianxiang, Zhenjiang, Jiangsu 212009 (CN); DING, Yuannan, Zhenjiang, Jiangsu 212009 (CN); WIEDMANN, Andre, 79244 Muenstertal (DE)
(74) Mandataire: IP Trust
(86) Numéro de dépôt international: PCT/EP2023/075327
(87) Numéro de publication internationale: WO 2024/099618

(56) Documents cités:
- FR-A1- 3 021 386
- US-A1- 2022 010 907
- US-A1- 2022 243 850
- US-A1- 2022 299 143

## Description

### DOMAINE DE L'INVENTION

La présente invention concerne un raccord tubulaire pour connecter des tuyaux ou conduits de fluide, du type connecteur rapide (« quick connector » selon le terme anglo-saxon généralement employé dans le domaine). Ces raccords peuvent trouver leur application dans le domaine de l'automobile, afin de former de manière simple et robuste un réseau de fluide dans un véhicule.

### ARRIERE PLAN TECHNOLOGIQUE DE L'INVENTION

On connaît par exemple de tels raccords des documents EP3171066, US7823930 ou FR3021386A1.

Ces raccords comprennent un corps principal destiné à recevoir un connecteur mâle de manière à permettre le passage d'un fluide entre deux conduits à une extrémité desquels le corps principal et le connecteur mâle sont respectivement reliés. Le corps principal est muni d'une ouverture radiale et de deux ouïes latérales. Un verrou présentant deux bras flexibles est configuré pour s'insérer transversalement dans l'ouverture radiale et pour placer respectivement les deux bras flexibles dans les deux ouïes latérales.

Le verrou peut être partiellement inséré dans le corps principal et occuper une position dite « de livraison ». Lorsque le connecteur mâle est correctement inséré dans le corps principal, le verrou peut être déplacé transversalement pour s'insérer entièrement dans le corps principal et occuper une position dite « de verrouillage ». Dans cette position, le verrou maintient fermement le connecteur mâle dans le corps principal et prévient leur désassemblage intempestif.

Il est connu de prévoir un indicateur, par exemple un indicateur visuel, permettant de facilement déterminer l'état de montage du raccord, c'est-à-dire déterminer si le corps principal est correctement assemblé à un connecteur mâle ou non. Ainsi, le document FR3021386A1 prévoit un indicateur visuel qui est masqué lorsque le verrou est en position de verrouillage.

Dans le document US20220243850 un motif de verrouillage, formant un indicateur visuel, est disposé sur le corps principal, le motif pouvant être masqué par un bras flexible du verrou en position de verrouillage. Pour permettre cela, le verrou est configuré pour que les bras flexibles ne pénètrent pas dans le corps principal, mais se clippent sur sa surface extérieure. Cette configuration dans laquelle les bras flexibles entourent le corps principal plutôt que de le pénétrer n'est pas souhaitable, car elle est particulièrement fragile.

Dans certains domaines d'application, comme celui de l'automobile, on prévoit un détecteur muni d'une caméra pour détecter automatiquement le motif de verrouillage des raccords. Il est nécessaire d'ajouter une pièce supplémentaire pour porter ce motif qui doit présenter une dimension minimale pour être décodable par le détecteur, ce qui rend la pièce plus grande et plus chère. C'est notamment le cas lorsque le motif de verrouillage est un code à barres bidimensionnel. Cette situation n'est évidemment pas souhaitable notamment lorsque l'espace de montage est très limité, par exemple dans un boîtier de batterie. Le motif de verrouillage est également parfois disposé sur un élément du raccord dans une position qui n'est pas propice à sa reconnaissance par un détecteur. Par exemple, le motif de verrouillage peut être placé sur une surface courbée du corps principal.

### OBJET DE L'INVENTION

Un but de l'invention est de proposer un raccord pour un circuit fluidique comprenant un motif de verrouillage présentant une configuration différente des raccords de l'état de la technique. Plus spécifiquement, un but de l'invention est de fournir un connecteur présentant un motif de verrouillage qui soit facile à identifier par un détecteur, notamment lorsque ce motif est formé d'un code à barres bidimensionnel.

### BREVE DESCRIPTION DE L'INVENTION

En vue de la réalisation de ce but, l'objet de l'invention propose un raccord fluidique comprenant :
- un corps principal tubulaire présentant une première ouverture destinée à recevoir un connecteur mâle tubulaire, le corps principal tubulaire étant muni d'une ouverture radiale et d'une ouverture secondaire;
- un verrou présentant deux bras flexibles reliés à une tête de verrou, le verrou étant configuré pour s'insérer transversalement dans l'ouverture radiale et pour placer les extrémités des deux bras flexibles dans l'ouverture secondaire, le verrou pouvant être inséré dans le corps principal tubulaire dans une position dite « de livraison » dans laquelle il occupe une première position transversale et dans une position dite « de verrouillage » dans laquelle il occupe une seconde position transversale, différente de la première.

Selon l'invention, le raccord comprend au moins un motif de verrouillage disposé sur le verrou de sorte que le motif de verrouillage soit au moins en partie masqué par le corps principal tubulaire lorsque le verrou est en position de livraison et de sorte que le motif de verrouillage soit entièrement exposé lorsque le verrou est en position de verrouillage.

Selon d'autres caractéristiques avantageuses et non limitatives de l'invention, prises seules ou selon toute combinaison techniquement réalisable :
- le motif de verrouillage est disposé sur un bras flexible du verrou ;
- l'extrémité d'au moins un bras flexible comporte une extension sur lequel est disposé le motif de verrouillage ;
- l'extension présente une surface principale orientée perpendiculairement à la direction axiale d'introduction d'un connecteur mâle tubulaire dans la première ouverture, lorsque le verrou est introduit dans l'ouverture radiale du corps principal tubulaire ;
- l'extension est disposée entre les deux bras flexibles ;
- deux extensions s'étendent latéralement à partir des extrémités des bras flexibles vers l'extérieur du verrou ;
- l'ouverture secondaire comprend deux ouïes latérales destinées à recevoir, respectivement, les deux bras flexibles du verrou ;
- le corps principal tubulaire comporte au moins une pièce saillante s'étendant radialement et disposée sur le corps principal de manière à occulter au moins une face d'une extension (21b) lorsque le verrou (2) n'est pas en position de verrouillage ;
- le motif de verrouillage est disposé en une position choisie d'un flanc d'un bras flexible de sorte que le motif de verrouillage soit au moins en partie masqué par le corps principal tubulaire lorsque le verrou occupe la position de livraison et de sorte que le motif de verrouillage soit entièrement exposé lorsque le verrou est en position de verrouillage.
- le raccord fluidique comporte, en outre, un connecteur mâle tubulaire destiné à pénétrer axialement dans la première ouverture du corps principal tubulaire ;
- connecteur mâle tubulaire comporte un collet annulaire ou une rainure annulaire;
- le verrou comprend deux bras de verrouillage ;
- chaque bras flexible porte un mécanisme de verrouillage au corps principal tubulaire ;
- le motif de verrouillage comprend un code à barres bidimensionnel ;
- le corps tubulaire est composé d'une bague et d'une tête de raccord encliquetées l'une à l'autre ;
- le raccord fluidique comprend une pluralité de crans et de fenêtres angulairement et régulièrement espacés à la périphérie de bague et de la tête de raccord ;
- le verrou comprend au moins un prolongateur sur lequel est positionné le motif de verrouillage, le prolongateur comprenant une seconde partie parallèle à l'un des deux bras flexibles et disposée dans un plan distinct de ce bras flexible ;
- le prolongateur comprend une première partie s'étendant perpendiculairement par rapport au bras flexible ;
- le corps principal tubulaire comporte au moins une pièce saillante s'étendant longitudinalement et disposée sur le corps principal de manière à occulter le motif de verrouillage lorsque le verrou n'est pas en position de verrouillage ;
- le raccord comprend une tête de raccord solidaire d'une section longitudinale, la tête de raccord présentant une dimension plus importante que la section longitudinale.

### BREVE DESCRIPTION DES FIGURES

D'autres caractéristiques et avantages de l'invention ressortiront de la description détaillée de l'invention qui va suivre en référence aux figures annexées sur lesquels :
[Fig.1]

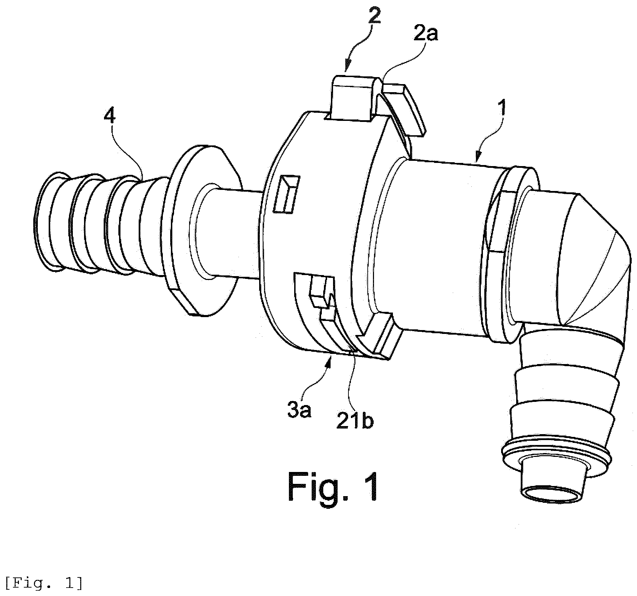

   La [Fig.1] représente un premier mode de réalisation d'un raccord tubulaire comprenant un verrou occupant une position dite « de livraison » ;
[Fig.2]

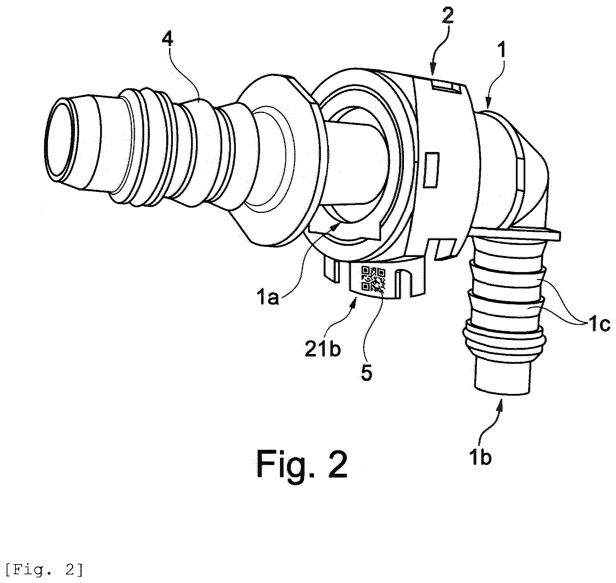

   La [Fig.2] représente un premier mode de réalisation d'un raccord tubulaire comprenant un verrou occupant une position dite « de verrouillage » ;
[Fig.3]

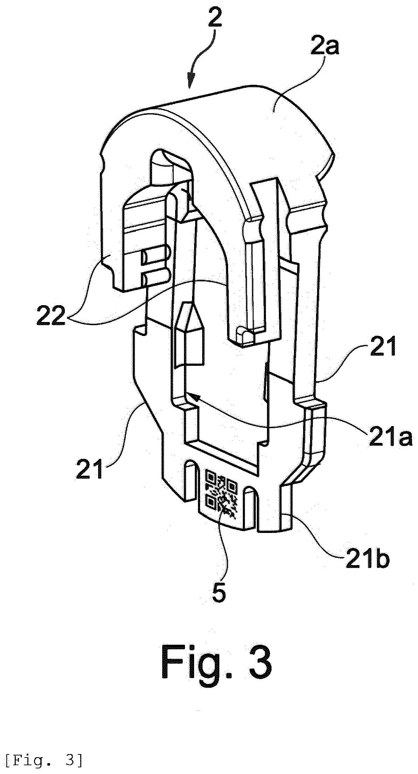

   La [Fig.3] représente un verrou compatible avec le premier mode de réalisation ;
[Fig.4]

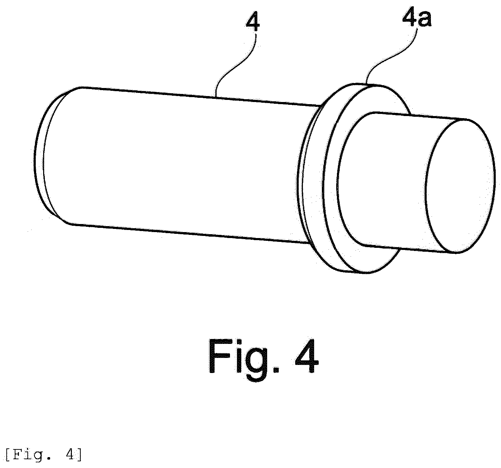

   La [Fig.4] représente un connecteur mâle tubulaire ;
[Fig.5]

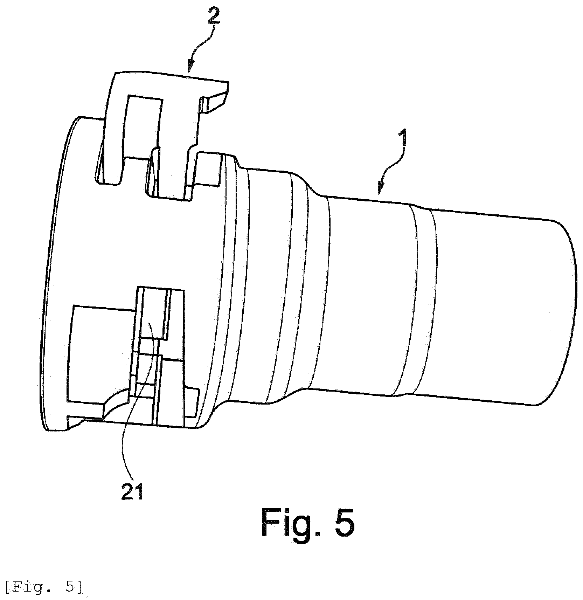

   La [Fig.5] représente un deuxième mode de réalisation d'un raccord tubulaire comprenant un verrou occupant une position dite « de livraison » ;
[Fig.6]

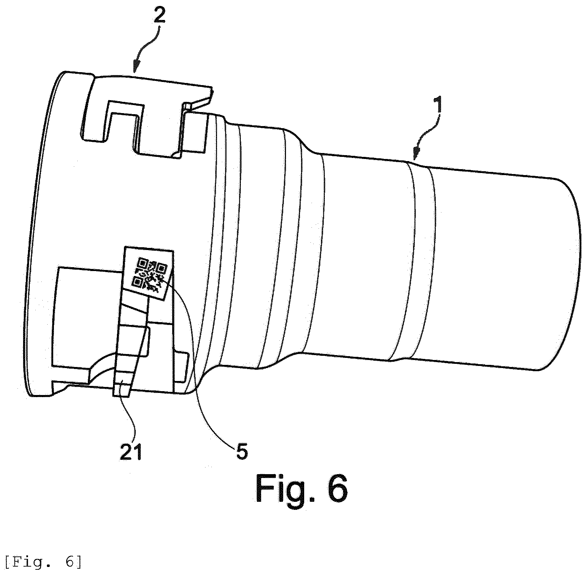

   La [Fig.6] représente un deuxième mode de réalisation d'un raccord tubulaire comprenant un verrou occupant une position dite « de verrouillage » ;
[Fig.7]

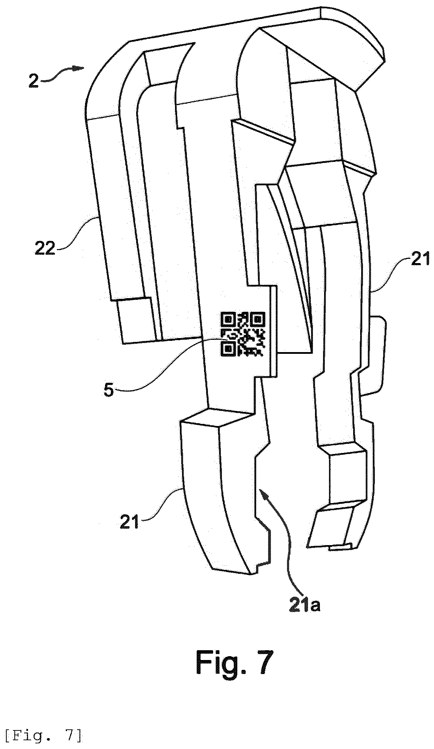

   La [Fig.7] représente un verrou compatible avec le deuxième mode de réalisation ;
[Fig.8]
[Fig.9]

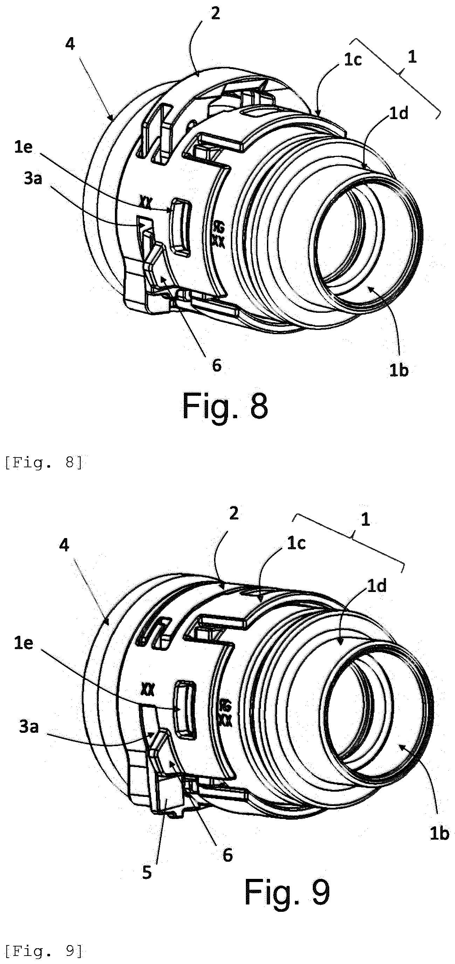

   Les figures 8 et 9 représentent une variante du premier mode de réalisation, respectivement en position de livraison et en position de verrouillage ;
[Fig.10]

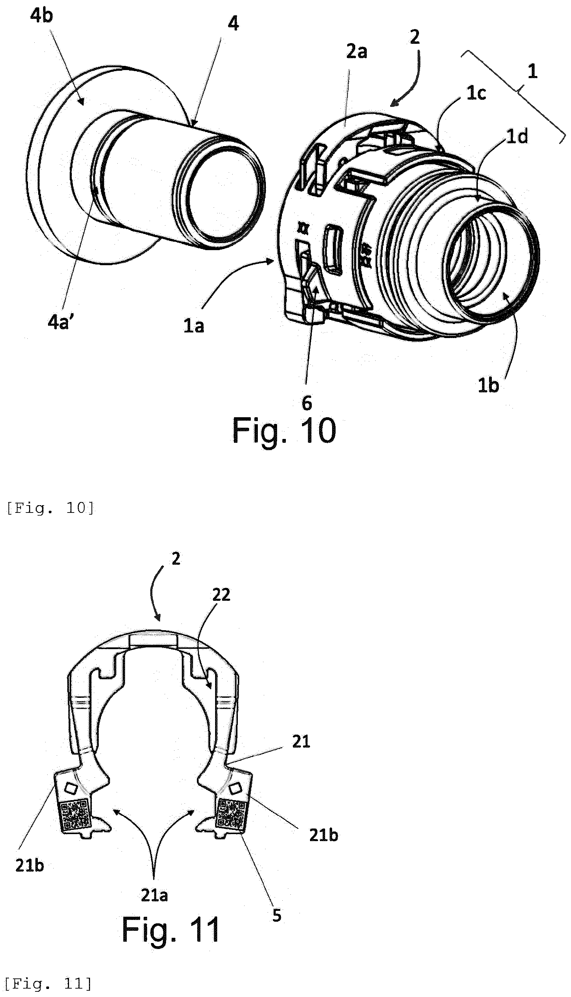

   La [Fig.10] représente un connecteur mâle tubulaire une et un corps principal tubulaire selon variante ;
[Fig.11]
   La [Fig.11] représente un verrou compatible avec la variante du premier mode de réalisation ;
[Fig.12]
[Fig.13]
[Fig.14]

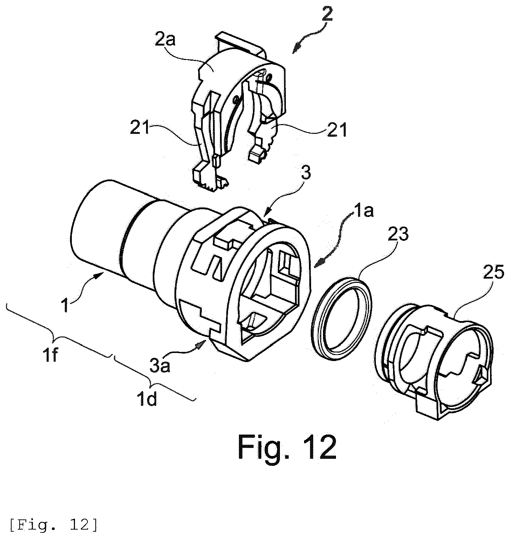

Les figures 12,13,14 illustrent un troisième mode de mise en œuvre.

### DESCRIPTION DETAILLEE DE L'INVENTION

Les figures 1 et 2 représentent un premier mode de réalisation d'un corps principal tubulaire 1 d'un raccord fluidique conforme à l'invention. Dans la représentation de la [Fig.1], le corps principal 1 est muni d'un verrou 2 qui occupe une première position transversale, dite « position de livraison ». Dans cette position, le verrou 2 n'est pas totalement introduit dans le corps principal tubulaire 1.

Dans la représentation de la [Fig.2], le corps principal 1 est muni d'un verrou 2 qui occupe cette fois une seconde position transversale dite « de verrouillage », la seconde position transversale étant différente de la première.

Préférentiellement, dans cette position, le verrou 2 est entièrement introduit dans le corps principal tubulaire 1, et la tête du verrou 2a affleure la surface externe de ce corps. Le corps principal tubulaire 1 et le verrou 2 sont mécaniquement configurés pour permettre d'escamoter ainsi la tête du verrou 2 lorsque ce verrou occupe la position de verrouillage.

Le raccord fluidique comprend également un connecteur mâle tubulaire 4, dont on présente un mode de réalisation en [Fig.4]. Une extrémité du connecteur mâle tubulaire 4 est destinée à pénétrer axialement dans une première ouverture 1a du corps principal, de manière à relier fluidiquement les deux pièces. Le corps principal tubulaire 1 présente également une deuxième ouverture 1b, disposé du côté opposé à la première ouverture 1a, cette seconde ouverture 1b étant destinée à être assemblée à un conduit, de sorte que le corps tubulaire 1 en constitue l'extrémité. A cet effet, le corps principal tubulaire 1 peut présenter, du côté de la seconde ouverture 1b, d'au moins un élément d'assemblage à un conduit, tel que les rainures 1c représentées sur la [Fig.2].

Le connecteur mâle tubulaire 4 est généralement muni d'un collet annulaire 4a permettant, en coopération avec le verrou 2, son assemblage au corps principal tubulaire 1.

Le corps principal tubulaire 1 est pourvu d'une ouverture radiale 3 permettant l'insertion transversale du verrou 2, et d'une ouverture secondaire 3a permettant le dégagement de deux bras flexibles du verrou 2, notamment lorsque celui-ci occupe la position de verrouillage.

La [Fig.3] représente un verrou 2 compatible avec un premier mode de réalisation de l'invention. Le verrou 2 comporte deux bras de verrouillage 22 ainsi que deux bras flexibles 21.

Les bras flexibles 21 présentent une longueur plus importante que les bras de verrouillage 22. Les deux bras flexibles comportent une extension 21b qui les relie au niveau de leurs extrémités. Cette extension est destinée à porter un motif de verrouillage 5, comme cela sera détaillé ultérieurement.

D'une manière plus générale, dans ce mode de réalisation, on peut prévoir que l'extension 21b ne soit solidaire que d'un seul des deux bras flexibles 21, il n'est donc pas nécessaire que l'extension 21b soit solidaire de chacun des bras flexibles 21 comme cela est représenté sur l'illustration de la figure. On peut également prévoir que chaque bras flexible 21 comporte une extension, ces extensions pouvant être latéralement jointives ou non. Cette extension (ou ces extensions) des bras flexibles peut être disposée(s) entre les deux bras, sous la tête du verrou 2. Mais plus généralement, une extension 21b de bras flexible 21 peut s'étendre latéralement d'un côté et/ou de l'autre d'une extrémité d'un bras flexible, c'est-à-dire s'étendre du côté de l'autre bras flexible et/ou s'étendre du côté opposé.

Dans tous les cas, dans ce premier mode de réalisation, l'extrémité d'au moins un bras flexible 21 comporte une extension 21b sur lequel est disposé le motif de verrouillage 5. Cette extension présente une surface principale perpendiculaire à la direction axiale d'introduction du connecteur mâle, lorsque le verrou est introduit dans l'ouverture radiale 3 du corps principal tubulaire 1. Avantageusement cette surface est plane, pour faciliter la détection du motif de verrouillage 5 par un détecteur.

Lorsque l'extrémité du connecteur mâle tubulaire 4 est disposée en buté dans le corps principal 1, les bras de verrouillage 22 sont aptes à se placer derrière le collet annulaire 4a, lorsque le verrou 2 est déplacé transversalement à travers l'ouverture radiale 3 pour le placer en position de verrouillage. Le connecteur mâle tubulaire 4 est alors maintenu fermement dans le corps principal 1, dont il ne peut plus être extrait.

Simultanément, les deux bras flexibles 21 se déplacent et leurs extrémités traversent l'ouverture secondaire 3a pour, en position de verrouillage, en déboucher. Chaque bras flexible 21 porte un mécanisme de verrouillage au corps principal 1, ici un cran 21a configuré pour s'emboiter sur un ergot formé sur le corps principal tubulaire 1. En position de verrouillage, les crans des bras flexibles 21 sont engagés sur les ergots, ce qui prévient le déplacement intempestif du verrou 2 qui pourrait libérer le connecteur mâle tubulaire 4.

Dans certains modes de réalisation, les extrémités des bras flexibles 21 reposent sur les ergots lorsque le verrou 2 occupe la position de livraison.

Dans certains modes de réalisation, l'insertion du connecteur mâle tubulaire 4 alors que le verrou occupe la position de livraison, provoque la mise en contact du collet annulaire 4a avec les bras flexibles 21. Ceux-ci sont susceptibles d'être élastiquement et axialement déplacés par le collet 4a, ce qui permet de déplacer transversalement le verrou 2 pour qu'il occupe la position de verrouillage et engager les crans 21a sur les ergots.

L'ouverture secondaire 3a présente une largeur (c'est-à-dire une dimension selon la direction axiale) suffisante pour permettre de dégager les crans 21a des ergots du corps principal, en tirant profit de la flexibilité des bras flexibles 21a. Ce dégagement est facilité par le fait que l'extrémité des bras flexibles débouche du corps principal 1, comme cela est bien visible sur la [Fig.2], ce qui permet de les manipuler. Dans cette position dégagée, on peut déplacer le verrou 4 de la position de verrouillage à la position de livraison et libérer le connecteur mâle tubulaire 4.

On note que l'invention n'est nullement limitée aux éléments du raccord tubulaire représentés à titre d'illustration sur les figures de ce premier mode de réalisation. Le raccord peut notamment comprendre d'autres pièces que celles présentées, comme par exemple une cage disposée dans le corps principal tubulaire 1, sous l'ouverture radiale 3, permettant de faciliter l'insertion et le verrouillage du connecteur mâle tubulaire 4, comme cela est notamment décrit dans les documents EP317066 ou FR3072756 et comme cela est illustré ultérieurement dans un autre mode de réalisation. On peut prévoir de munir le corps principal tubulaire et/ou le connecteur mâle tubulaire 4 de joints d'étanchéité. Les bras flexibles 21 peuvent présenter d'autres mécanismes de verrouillage au corps principal tubulaire 1 que les crans 21a du verrou 2 donné en exemple. Les bras de verrouillage 22 peuvent être remplacés par un autre mécanisme permettant de retenir assemblé le connecteur mâle tubulaire 4 au corps principal 1.

Dans tous les cas néanmoins, le verrou 2 présente deux bras flexibles 21, ce verrou 2 étant configuré pour s'insérer transversalement dans l'ouverture radiale 3 et pour placer respectivement les deux bras flexibles 21 dans l'ouverture secondaire 3a.

Dans le cadre de la présente description, on prévoit de munir le raccord d'un indicateur, par exemple un indicateur visuel, permettant de facilement déterminer l'état de montage de ce raccord, c'est-à-dire déterminer si le corps principal est correctement assemblé à un connecteur mâle ou non.

A cet effet, et pour tous les modes de réalisation, le verrou 2 porte au moins un motif de verrouillage 5. Avantageusement, et dans certains modes de réalisation, le motif de verrouillage est disposé sur au moins un bras flexible 21 du verrou.

Dans le premier mode de réalisation représenté sur les figures 1 à 3, le motif de verrouillage 5 est disposé sur l'extension 21b disposée entre les deux bras flexibles, au niveau de leurs extrémités.

Le motif de verrouillage 5 peut être de nature varié, mais avantageusement il comprend un code, tel qu'un code-barre unidimensionnel (par exemple, code UPC, code EAN, code 39, code 128, ITF, code 93, codabar, GS1 databar, MSI Plessey, etc. ), un code à barres bidimensionnel (par exemple code QR, code datamatrix, PDF417, AZTEC, etc.), un code holographique, un code alphanumérique lisible par l'homme, d'autres codes connus dans l'art et interprétables par une machine équipée d'un dispositif de vision et/ou par un opérateur.

Le verrou 2 est configuré de sorte que l'extension 21b ne débouche pas, ou pas entièrement, de l'ouverture secondaire 3a lorsque le verrou 2 occupe la position de livraison (comme cela est représenté sur la [Fig.1]). De la sorte, le motif de verrouillage 5 porté par cette extension 21b est au moins en partie masqué par le corps principal tubulaire 1. Ce motif ne pouvant être visualisé et décodé, il est possible de déterminer que le corps principal tubulaire n'est pas assemblé (ou n'est pas correctement assemblé) au connecteur mâle tubulaire 4.

Le verrou 2 est également configuré de sorte que l'extension 21b débouche suffisamment de l'ouverture secondaire 2b, lorsque le verrou 2 occupe la position de verrouillage, pour exposer entièrement le motif de verrouillage 5 (comme cela est représenté sur la [Fig.2]). Ce motif pouvant être visualisé et décodé, il est possible de déterminer que le corps principal tubulaire est bien assemblé au connecteur mâle tubulaire 4.

Les figures 8 et 9 représentent une variante du premier mode de réalisation. Dans la représentation de la [Fig.8], le corps tubulaire 1 du raccord fluidique est en position de livraison, le verrou 2 étant dans une première position transversale, non entièrement introduit dans le corps principal tubulaire 1. Dans la représentation de la [Fig.9], le corps principal 1 est en position de verrouillage, le verrou 2 étant dans une seconde position transversale entièrement engagée dans le corps tubulaire 1. On présente dans les paragraphes qui suivent les éléments différenciants de cette variante, étant entendu que les éléments communs au premier mode de réalisation présenté en référence aux figures 1 à 4 ne sont pas répétés, par souci de concision.

Dans cette variante, et comme cela est représenté sur la [Fig.10], le connecteur mâle tubulaire 4 présente une rainure annulaire 4a' permettant, en coopération avec le verrou 2, son assemblage au corps principal tubulaire 1. A cet effet, les tranches des bras de verrouillage 22 du verrou 2 présentent une dimension qui les rend aptes, en position de verrouillage, à s'engager dans la rainure 4a' pour bloquer le mouvement axial du connecteur mâle tubulaire 4. Le connecteur mâle tubulaire 4 présente également une embase 4b, plaqué contre le corps principal 1, du côté de sa première ouverture 1a, lorsque le raccord est en position de verrouillage.

Le corps principal tubulaire 1, dans cette variante, est composé d'une bague 1c et d'une tête de raccord 1d encliquetée l'une à l'autre. A cet effet, la bague 1c est munie de fenêtres 1e dans lesquelles des crans portés par la tête de raccord 1d peuvent s'engager. Toute autre configuration d'encliquetage est bien entendu possible.

Avantageusement, une pluralité de crans et de fenêtres sont agencés angulairement et régulièrement espacés à la périphérie de bague 1c et de la tête de raccord 1d, par exemple tous les 45°. Il est ainsi possible d'assembler ces deux parties en les indexant angulairement l'un par rapport à l'autre selon différentes orientations. Cela permet notamment de choisir l'orientation de la bague 1c, et donc de choisir la direction d'exposition du ou des motif(s) de verrouillage 5, indépendamment de l'orientation de la tête de raccord 1d, celle-ci pouvant être imposée par le système dans lequel le raccord est destiné à s'intégrer. Cette caractéristique permet de rendre l'un au moins des motifs de verrouillage plus directement visible et décodé pour déterminer dans quelle mesure le connecteur mâle tubulaire 4 est assemblé au corps principal tubulaire 1. On peut notamment choisir l'angle d'indexation pour éviter d'obstruer l'un au moins des motifs par d'autres objets du système tels que des faisceaux de câbles, des tuyaux, voire même une partie corps principal tubulaire 1, lorsque ce corps présente une forme courbée comme celui représenté sur la [Fig.1].

On note que cette caractéristique avantageuse peut être intégrée à tous les modes de réalisation.

La [Fig.11] représente un verrou 2 compatible avec cette variante du premier mode de réalisation. On retrouve bien sur ce verrou, les deux bras de verrouillage 22 ainsi que deux bras flexibles 21. On retrouve également les crans destinés à s'engager sur les ergots du corps principal 1, pour prévenir le déplacement intempestif du verrou 2 lorsqu'il est inséré dans le corps principal 1 et ainsi placer le raccord en position de verrouillage.

Chaque bras flexible 21 comporte ici une extension 21b portant un motif de verrouillage 5. On pourrait bien entendu envisager une unique extension 21b portée par l'un des bras flexibles uniquement. Les extensions 21b s'étendent latéralement à partir des extrémités des bras flexibles 21, vers l'extérieur du verrou 2. Les extensions 21b présentent une surface principale plane et orientée perpendiculairement à la direction axiale d'introduction du connecteur tubulaire mâle 4, lorsque le verrou 2 est introduit dans l'ouverture radiale du corps principal tubulaire 1.

Lorsque le verrou 2 est en position de livraison, comme cela est représenté sur la [Fig.8], les extensions 21b ne débouchent pas, ou pas entièrement, de l'ouverture secondaire 3a du corps principal tubulaire 1, ici formée de deux ouïes latérales 3a. En conséquence, les motifs de verrouillage 5 sont, au moins en partie, masqués.

Au contraire, lorsque le verrou 2 est en position de verrouillage, comme cela est représenté sur la [Fig.9], les extensions 21b débouchent suffisamment des ouïes latérales 3a pour exposer entièrement les motifs de verrouillage 5. Il est alors possible de déterminer que le connecteur mâle tubulaire 4 est bien assemblé au corps principal tubulaire 1.

Pour renforcer le masquage au moins partiel des motifs de verrouillage 5 lorsque le raccord n'est pas en position de verrouillage, on peut munir le corps principal tubulaire 1 de masques 6, formés dans ce mode de mise en œuvre d'une partie saillante s'étendant radialement du corps principal 1. Ces masques 6 sont disposés sur le corps principal 1 de manière à occulter au moins une face des extensions 21b, notamment celle portant les motifs de verrouillage 5, lorsque le raccord n'est pas parfaitement en position de verrouillage.

On note que dans ce premier mode de réalisation, il est possible de faire porter un motif de verrouillage 5 sur chacune des faces des extensions 21b. Cela permet de visualiser et décoder ce motif 5 à partir d'une position de lecture avant, du côté de la première ouverture 1a du corps principal 1, dans laquelle l'une des faces est visible. Cela permet également de visualiser et de décoder le motif 5 à partir d'une position de lecture arrière, du côté de la seconde ouverture 1b du corps principal 1, dans laquelle l'autre face est visible. On peut prévoir de faire porter plusieurs masques 6 au corps principal tubulaire 1, de manière à occulter chacune des faces des extensions 21b lorsque le raccord n'est pas parfaitement en position de verrouillage.

Les figures 5 et 6 représentent un deuxième mode de réalisation d'un raccord fluidique conforme à l'invention. Pour des raisons de concision, on ne détaillera dans les paragraphes qui suivent que les éléments distinguant ce mode de réalisation du premier. Toutes les autres caractéristiques exposées du premier mode pouvant de ce fait s'appliquer à ce deuxième mode sans qu'il soit nécessaire de le préciser.

Dans la représentation de la [Fig.5], le corps principal 1 est muni d'un verrou 2 qui occupe la position de livraison. Dans cette position, le verrou 2 n'est pas totalement introduit dans le corps principal tubulaire 1.

Dans la représentation de la [Fig.6], le verrou 2 occupe cette fois la position de verrouillage, escamoté dans le corps principal tubulaire.

Le corps principal tubulaire de ce mode de réalisation comporte une ouverture secondaire réalisée sous la forme de deux ouïes latérales 3a, 3b. Les ouïes latérales 3a,3b sont destinées à recevoir, respectivement, les deux bras flexibles du verrou 2, notamment lorsque celui-ci occupe la position de verrouillage. Les ouïes latérales 3a,3b peuvent se rejoindre pour former, en vis-à-vis de l'ouverture radiale 1a, une ouverture secondaire étendue aménagée sur le corps principal tubulaire 1.

La [Fig.7] représente un verrou 2 compatible avec ce second mode de réalisation de l'invention. Les deux bras de verrouillage 22 ainsi que les deux bras flexibles 21 forment un double cavalier en U retourné.

Dans ce second mode de réalisation, le motif de verrouillage 5 est disposé sur un flanc latéral d'un bras flexible 21. Le motif de verrouillage 5 est notamment disposé en une position choisie de ce flanc de sorte que le motif de verrouillage 5 soit au moins en partie masqué par le corps principal tubulaire 1 lorsque le verrou 2 occupe la position de livraison. La position du motif de verrouillage est également choisie de sorte que le motif de verrouillage 5 soit entièrement exposé à travers l'ouïe latérale 3a, 3b dans lequel le bras flexible 21 est placé lorsque le verrou 2 est en position de verrouillage. Le flanc latéral du bras flexible sur lequel est placé le motif 5 présente une surface disposée selon la direction axiale d'introduction du connecteur mâle, lorsque le verrou est introduit dans l'ouverture radiale 3 du corps principal tubulaire 1. Avantageusement cette surface du bras flexible est plane, pour faciliter la détection du motif de verrouillage 5 par un détecteur.

On peut prévoir que le verrou 2 comporte un unique motif de verrouillage, sur le flanc d'un unique bras flexible. Alternativement, on peut prévoir de faire porter au verrou deux motifs de verrouillage, respectivement disposés sur un flanc de chacun des bras flexibles 21.

Les figures 12, 13 et 14 illustrent un troisième mode de mis en œuvre de l'invention. Dans ce mode de mise en œuvre, la tête de raccord 1d du corps principal 1 est solidaire d'une section longitudinale 1f. La tête de raccord 1d présente une dimension bien plus importante que la section longitudinale 1f afin de loger un joint 23 et une cage 25. La cage 25 coopère avec le verrou 2 afin de retenir le connecteur mâle tubulaire dans la position de verrouillage du verrou 2. Le mécanisme de verrouillage exploitant une cage est bien connu en soi (voir par exemple le document FR3044070) et ne fera donc pas l'objet d'une description détaillée, par souci de concision.

Le verrou 2 est similaire au verrou des autres modes de mise en œuvre en ce qu'il comprend une tête 2a, deux bras flexibles 21 et deux bras de verrouillage 22 qui forment, avec les deux bras flexibles 21, un double cavalier en U retourné. On retrouve également dans ce mode de mise en œuvre un motif de verrouillage 5 disposé sur le verrou 2. Ce motif de verrouillage 5 est ici positionné sur un prolongateur 24 permettant de le placer dans un plan distinct et éloigné du plan défini par les bras flexibles 21. Le prolongateur 24 est, dans l'exemple représenté, en forme de L. Il comporte une première partie 24a solidaire de la tête 2a du verrou s'étendant perpendiculairement par rapport au bras flexible. La première partie est solidaire d'une seconde partie du prolongateur 24b. Cette seconde partie s'étend, parallèlement au bras flexible, de son extrémité solidaire de la première partie à son extrémité libre. Cette extrémité libre porte le motif de verrouillage 5.

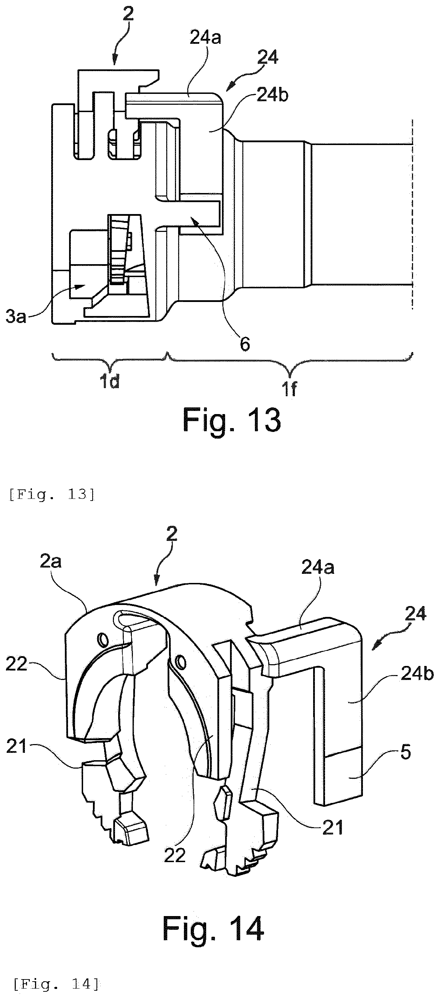

Comme cela est visible sur la [Fig.13], la tête de raccord porte un masque 6 s'étendant ici longitudinalement, c'est-à-dire le long de la section longitudinale 1f. Le masque 6 forme donc une partie saillante s'étendant longitudinalement de manière à occulter au moins la seconde partie du prolongateur 24b portant le motif de verrouillage 5, lorsque le raccord (et notamment le verrou 2 comme cela est visible sur la [Fig.13]) n'est pas parfaitement en position de verrouillage. Lorsque le verrou 2 est placé dans sa position de verrouillage, dans laquelle il occupe une seconde position transversale, le motif de verrouillage 5 n'est pas masqué par le masque 6. Il peut donc être détecté et la position de verrouillage effectivement vérifiée.

Tout comme dans les modes de mises en œuvre précédents, on pourrait prévoir de munir le verrou 2 de deux prolongateurs 24 disposés de part et d'autre du verrou 2, chaque prolongateur 24 portant son propre motif de verrouillage sélectivement masqué par un masque disposé de part et d'autre de la tête de raccord 1d.

On note qu'en positionnant au moins un motif de verrouillage sur le verrou 2, sur un bras flexible ou sur un prolongateur, on peut préserver un mécanisme de verrouillage robuste du verrou et prévenir le déverrouillage intempestif du raccord tubulaire, tout en proposant un indicateur visuel permettant de déterminer l'état de montage de ce raccord.

Bien entendu l'invention n'est pas limitée au mode de mise en œuvre décrit et on peut y apporter des variantes de réalisation sans sortir du cadre de l'invention tel que défini par les revendications.

## Revendications

1. Raccord fluidique comprenant :
- un corps principal tubulaire (1) présentant une première ouverture (1a) destinée à recevoir un connecteur mâle tubulaire (4), le corps principal tubulaire (1) étant muni d'une ouverture radiale (3) et d'une ouverture secondaire (3a) ;
- un verrou (2) présentant deux bras flexibles (21) reliés à une tête de verrou (2a), le verrou (2) étant configuré pour s'insérer transversalement dans l'ouverture radiale (3) et pour placer les extrémités des deux bras flexibles (21) dans l'ouverture secondaire (3a), le verrou (2) pouvant être inséré dans le corps principal tubulaire (1) dans une position dite « de livraison » dans laquelle il occupe une première position transversale et dans une position dite « de verrouillage » dans laquelle il occupe une seconde position transversale, différente de la première ;
le raccord étant **caractérisé en ce qu'**il comprend au moins un motif de verrouillage (5) disposé sur le verrou (2) de sorte que le motif de verrouillage (5) soit au moins en partie masqué par le corps principal tubulaire (1) lorsque le verrou (2) est en position de livraison et de sorte que le motif de verrouillage (5) soit entièrement exposé lorsque le verrou (2) est en position de verrouillage.

2. Raccord fluidique selon la revendication précédente dans lequel
l'ouverture secondaire comprend deux ouïes latérales (3a, 3b) destinées à recevoir, respectivement, les deux bras flexibles (21) du verrou (2).

3. Raccord fluidique selon l'une des deux revendications précédentes dans lequel le motif de verrouillage (5) est disposé sur un bras flexible (21) du verrou.

4. Raccord fluidique selon la revendication précédente dans lequel
l'extrémité d'au moins un bras flexible (21) comporte au moins une extension (21b) sur lequel est disposé le motif de verrouillage (5).

5. Raccord fluidique selon la revendication précédente dans lequel
l'extension (21b) présente une surface principale orientée perpendiculairement à la direction axiale d'introduction d'un connecteur mâle tubulaire (4) dans la première ouverture (1a), lorsque le verrou (2) est introduit dans l'ouverture radiale (3) du corps principal tubulaire (1).

6. Raccord fluidique selon l'une des revendications 4 à 5 dans lequel le corps principal tubulaire comporte au moins une pièce saillante (6) s'étendant radialement et disposée sur le corps principal de manière à occulter au moins une face d'une extension (21b) lorsque le verrou (2) n'est pas en position de verrouillage.

7. Raccord fluidique selon l'une des revendications 1 à 3 dans lequel le motif de verrouillage (5) est disposé en une position choisie d'un flanc d'un bras flexible.

8. Raccord fluidique selon la revendication 1 ou 2 dans lequel le verrou (2) comprend au moins un prolongateur (24) sur lequel est positionné le motif de verrouillage (5), le prolongateur comprenant une seconde partie (24b) parallèle à l'un des deux bras flexibles (21) et disposée dans un plan distinct de ce bras flexible (21).

9. Raccord fluidique selon la revendication précédente, dans lequel le prolongateur comprend une première partie (24a) s'étendant perpendiculairement par rapport au bras flexible (21).

10. Raccord fluidique selon l'une des deux revendications précédentes lequel le corps principal tubulaire (1) comporte au moins une pièce saillante (6) s'étendant longitudinalement et disposée sur le corps principal de manière à occulter le motif de verrouillage (5) lorsque le verrou (2) n'est pas en position de verrouillage.

11. Raccord fluidique selon l'une des revendications précédentes comportant en outre un connecteur mâle tubulaire (4) destiné à pénétrer axialement dans la première ouverture (1a) du corps principal tubulaire (1), le connecteur mâle tubulaire (4) comportant un collet annulaire (4a) ou une rainure annulaire (4a').

12. Raccord fluidique selon l'une des revendications précédentes dans lequel le motif de verrouillage (5) comprend un code à barres bidimensionnel.

13. Raccord fluidique selon l'une des revendications précédentes dans lequel le corps tubulaire est composé d'une bague (1c) et d'une tête de raccord (1d) encliquetées l'une à l'autre.

14. Raccord fluidique selon la revendication précédente comprenant une pluralité de crans et de fenêtres (1e) angulairement et régulièrement espacés à la périphérie de bague (1c) et de la tête de raccord (1d).

15. Raccord fluidique selon l'une des revendications 1 à 12 dans lequel le corps tubulaire est composé d'une tête de raccord (1d) solidaire d'une section longitudinale (1f), la tête de raccord (1d) présentant une dimension plus importante que la section longitudinale (1f).

## Patentansprüche

1. Fluidkopplung, umfassend:
- einen rohrförmigen Hauptkörper (1), der eine erste Öffnung (1a) aufweist, die zum Aufnehmen eines rohrförmigen Steckers (4) bestimmt ist, wobei der rohrförmige Hauptkörper (1) mit einer radialen Öffnung (3) und einer sekundären Öffnung (3a) versehen ist;
- eine Verriegelung (2), die zwei flexible Arme (21) aufweist, die mit einem Verriegelungskopf (2a) verbunden sind, wobei die Verriegelung (2) zum Einfügen quer in die radiale Öffnung (3) und zum Platzieren der Enden der zwei flexiblen Arme (21) in der sekundären Öffnung (3a) konfiguriert ist, wobei die Verriegelung (2) in den rohrförmigen Hauptkörper (1) in einer sogenannten "Lieferposition", in der sie eine erste Querposition einnimmt, und in einer sogenannten "Verriegelungsposition" eingeführt werden kann, in der sie eine zweite Querposition einnimmt, die sich von der ersten unterscheidet;
wobei die Kopplung **dadurch gekennzeichnet ist, dass** sie mindestens ein Verriegelungsmuster (5) umfasst, das an der Verriegelung (2) angeordnet ist, sodass das Verriegelungsmuster (5) mindestens teilweise durch den rohrförmigen Hauptkörper (1) maskiert ist, wenn die Verriegelung (2) in Lieferposition ist, und sodass das Verriegelungsmuster (5) vollständig freigelegt ist, wenn die Verriegelung (2) in Verriegelungsposition ist.

2. Fluidkopplung nach dem vorstehenden Anspruch, wobei die sekundäre Öffnung zwei seitliche Lufteinlässe (3a, 3b) umfasst, die dazu bestimmt sind, jeweils die zwei flexiblen Arme (21) der Verriegelung (2) aufzunehmen.

3. Fluidkopplung nach einem der zwei vorstehenden Ansprüche, wobei das Verriegelungsmuster (5) an einem flexiblen Arm (21) der Verriegelung angeordnet ist.

4. Fluidkopplung nach dem vorstehenden Anspruch, wobei das Ende mindestens eines flexiblen Arms (21) mindestens eine Verlängerung (21b) vorweist, auf der das Verriegelungsmuster (5) angeordnet ist.

5. Fluidkopplung nach dem vorstehenden Anspruch, wobei die Verlängerung (21b) eine Hauptoberfläche aufweist, die senkrecht zu der axialen Einsetzrichtung eines rohrförmigen Steckers (4) in die erste Öffnung (1a) orientiert ist, wenn die Verriegelung (2) in die radiale Öffnung (3) des rohrförmigen Hauptkörpers (1) eingesetzt ist.

6. Fluidkopplung nach einem der Ansprüche 4 bis 5, wobei der rohrförmige Hauptkörper mindestens ein vorstehendes Stück (6) vorweist, das sich radial erstreckt und an dem Hauptkörper derart angeordnet ist, dass es mindestens eine Fläche einer Verlängerung (21b) verdeckt, wenn die Verriegelung (2) nicht in Verriegelungsposition ist.

7. Fluidkopplung nach einem der Ansprüche 1 bis 3, wobei das Verriegelungsmuster (5) in einer gewählten Position einer Flanke eines flexiblen Arms angeordnet ist.

8. Fluidkopplung nach Anspruch 1 oder 2, wobei die Verriegelung (2) mindestens eine Verlängerung (24) umfasst, auf der das Verriegelungsmuster (5) positioniert ist, die Verlängerung umfassend einen zweiten Teil (24b), der parallel zu einem der zwei flexiblen Arme (21) ist und in einer von diesem flexiblen Arm (21) verschiedenen Ebene angeordnet ist.

9. Fluidkopplung nach dem vorstehenden Anspruch, wobei die Verlängerung einen ersten Teil (24a) umfasst, der sich senkrecht zu dem flexiblen Arm (21) erstreckt.

10. Fluidkopplung nach einem der zwei vorstehenden Ansprüche, wobei der rohrförmige Hauptkörper (1) mindestens ein vorstehendes Stück (6) vorweist, das sich längs erstreckt und an dem Hauptkörper derart angeordnet ist, dass es das Verriegelungsmuster (5) verdeckt, wenn die Verriegelung (2) nicht in Verriegelungsposition ist.

11. Fluidkopplung nach einem der vorstehenden Ansprüche, die ferner einen rohrförmigen Stecker (4) aufweist, der dazu bestimmt ist, axial in die erste Öffnung (1a) des rohrförmigen Hauptkörpers (1) einzudringen, wobei der rohrförmige Stecker (4) einen ringförmigen Kragen (4a) oder eine ringförmige Nut (4a') vorweist.

12. Fluidkopplung nach einem der vorstehenden Ansprüche, wobei das Verriegelungsmuster (5) einen zweidimensionalen Strichcode umfasst.

13. Fluidkopplung nach einem der vorstehenden Ansprüche, wobei der rohrförmige Körper aus einem Ring (1c) und einem Kopplungskopf (1d) besteht, die miteinander verrastet sind.

14. Fluidkopplung nach dem vorstehenden Anspruch, umfassend eine Vielzahl von Kerben und Fenstern (1e), die winkelmäßig und regelmäßig an dem Umfang des Rings (1c) und des Kopplungskopfes (1d) beabstandet sind.

15. Fluidkopplung nach einem der Ansprüche 1 bis 12, wobei der rohrförmige Körper aus einem Verbindungskopf (1d) besteht, der mit einem Längsabschnitt (1f) fest verbunden ist, wobei der Kopplungskopf (1d) eine größere Abmessung als der Längsabschnitt (1f) aufweist.

## Claims

1. A fluid fitting comprising:
- a tubular main body (1) having a first opening (1a) intended to receive a tubular male connector (4), the tubular main body (1) being provided with a radial opening (3) and a secondary opening (3a);
- a bolt (2) having two flexible arms (21) connected to a bolt head (2a), the bolt (2) being designed to be inserted transversely into the radial opening (3) and to place the ends of the two flexible arms (21) into the secondary opening (3a), the bolt (2) being able to be inserted into the tubular main body (1) in a so-called "delivery" position, wherein it occupies a first transverse position, and in a so-called "locking" position, wherein it occupies a second transverse position, different from the first;
the fitting being **characterized in that** it comprises at least one locking design (5) arranged on the bolt (2) so that the locking design (5) is at least partially masked by the tubular main body (1) when the bolt (2) is in the delivery position and so that the locking design (5) is completely exposed when the bolt (2) is in the locking position.

2. The fluid fitting according to the preceding claim, wherein the secondary opening comprises two lateral vents (3a, 3b) intended to receive, respectively, the two flexible arms (21) of the bolt (2).

3. The fluid fitting according to one of the two preceding claims, wherein the locking design (5) is arranged on a flexible arm (21) of the bolt.

4. The fluid fitting according to the preceding claim, wherein the end of at least one flexible arm (21) comprises at least one extension (21b) on which the locking design (5) is arranged.

5. The fluid fitting according to the preceding claim, wherein the extension (21b) has a main surface oriented perpendicular to the axial direction of insertion of a tubular male connector (4) into the first opening (1a), when the bolt (2) is inserted into the radial opening (3) of the tubular main body (1).

6. The fluid fitting according to one of claims 4 to 5, wherein the tubular main body comprises at least one protruding part (6) extending radially and arranged on the main body so as to obscure at least one face of an extension (21b) when the bolt (2) is not in the locking position.

7. The fluid fitting according to one of claims 1 to 3, wherein the locking design (5) is arranged in a selected position of a flank of a flexible arm.

8. The fluid fitting according to claim 1 or 2, wherein the bolt (2) comprises at least one extender (24) on which the locking design (5) is positioned, the extender comprising a second part (24b) parallel to one of the two flexible arms (21) and arranged in a plane distinct from that flexible arm (21).

9. The fluid fitting according to the preceding claim, wherein the extender comprises a first part (24a) extending perpendicularly relative to the flexible arm (21).

10. The fluid fitting according to one of the two preceding claims, wherein the tubular main body (1) comprises at least one protruding part (6) extending longitudinally and arranged on the main body so as to obscure the locking design (5) when the bolt (2) is not in the locking position.

11. The fluid fitting according to one of the preceding claims, further comprising a tubular male connector (4) intended to penetrate axially into the first opening (1a) of the tubular main body (1), the tubular male connector (4) comprising an annular collar (4a) or an annular groove (4a').

12. The fluid fitting according to one of the preceding claims, wherein the locking design (5) comprises a two-dimensional barcode.

13. The fluid fitting according to one of the preceding claims, wherein the tubular body is composed of a ring (1c) and a fitting head (1d) snap-fastened to one another.

14. The fluid fitting according to the preceding claim, comprising a plurality of angularly and regularly spaced notches and windows (1e) at the periphery of the ring (1c) and of the fitting head (1d).

15. The fluid fitting according to one of claims 1 to 12, wherein the tubular body is composed of a fitting head (1d) secured to a longitudinal section (1f), the fitting head (1d) having a dimension greater than the longitudinal section (1f).
